(19) Europäisches Patentamt
European Patent Office
Office européen des brevets

(11) **EP 1 550 497 A1**

(12) **EUROPÄISCHE PATENTANMELDUNG**

(43) Veröffentlichungstag:
**06.07.2005 Patentblatt 2005/27**

(51) Int Cl.⁷: **B01D 63/02**

(21) Anmeldenummer: **04106728.1**

(22) Anmeldetag: **20.12.2004**

(84) Benannte Vertragsstaaten:
**AT BE BG CH CY CZ DE DK EE ES FI FR GB GR HU IE IS IT LI LT LU MC NL PL PT RO SE SI SK TR**
Benannte Erstreckungsstaaten:
**AL BA HR LV MK YU**

(30) Priorität: **23.12.2003 DE 10361580**

(71) Anmelder: **MANN+HUMMEL GmbH**
**71638 Ludwigsburg (DE)**

(72) Erfinder:
- **Tudyka, Stefan**
  **71642, Ludwigsburg (DE)**
- **Gerlach, Karin**
  **71696, Möglingen (DE)**

(54) **Keramisches Hohlfaser-Membranmodul**

(57)    Ein keramisches Hohlfaser-Membranmodul (1) umfasst mindestens eine keramische Hohlfaser (7), deren stirnseitige Endabschnitte (7a,7b) in zwei beabstandeten Einfassungen (8,9) aufgenommen sind, welche an einem Verbindungsbauteil (2,11) gehalten sind. Der Relativabstand der beiden Einfassungen (8,9) zueinander ist veränderlich einstellbar.

Fig. 1a

EP 1 550 497 A1

Fig. 16

**Beschreibung**

Die Erfindung bezieht sich auf ein keramisches Hohlfaser-Membranmodul nach dem Oberbegriff des Anspruches 1.

Aus der Druckschrift WO 03/051495 A1 ist ein Hohlfaser-Membranmodul bekannt, dessen Hohlfasern aus einem Keramikmaterial bestehen. Das Modul umfasst ein zylindrisches Gehäuse, in dessen Innenraum eine Mehrzahl axial verlaufender Hohlfasern gespannt sind. Die Hohlfasern sind im Bereich ihrer beiden Stirnseiten von einer scheibenförmigen Vergussmasse eingefasst, welche den Gehäuseinnenraum von der Außenseite separiert. Das Hohlfaser-Membranmodul kann zu Filtrationszwecken eingesetzt werden. Ein Fluid, welches zwei verschiedene, zu separierende Substanzen enthält, wird in den Gehäuseinnenraum eingeführt, wobei diejenige Substanz im Fluid mit kleinerem Teilchendurchmesser durch die poröse Hohlfaserwandung radial von außen nach innen in den Hohlfaser-Innenraum eindringt und in den Hohlfasern stirnseitig abgeleitet wird. Das aufkonzentrierte Fluid mit der Substanz mit größerem Teilchendurchmesser, die nicht die Hohlfaserwandung durchdringen kann, wird wieder aus dem Gehäuseinnenraum abgeleitet. Zur Verbesserung des Abscheidegrades kann das Fluid in einem Kreisprozess kontinuierlich bzw. wiederholt durch das Hohlfaser-Membranmodul geleitet werden. Die Abscheidewirkung wird hierbei maßgeblich von der Porengröße in der Wandung der Hohlfasern bestimmt.

Das die Hohlfasern einschließende Gehäuse besteht aus einem Material mit gleichem Wärmedehnungskoeffizienten wie die Hohlfasern, um Wärmespannungen und -dehnungen bei einem Betrieb mit erhöhter Temperatur zu verhindern, welche zu einem Bruch der Hohlfasern führen könnten. Als Material für die Gehäusewandung kann ebenso wie für die Hohlfasern Keramik eingesetzt werden. Im Betrieb auftretende mechanische und thermische Belastungen müssen bis zu einem bestimmten Grad von dem Membranmodul und insbesondere von den Hohlfasern im Gehäuse ohne Schaden zu nehmen aufgenommen werden.

Der Erfindung liegt das Problem zugrunde, ein keramisches Hohlfaser-Membranmodul vielseitig einsetzbar auszubilden. Das Hohlfaser-Membranmodul soll insbesondere erhöhten Belastungen wie zum Beispiel Vibrationen, Stößen, Druck- und Temperaturschwankungen ohne Beschädigung standhalten.

Dieses Problem wird erfindungsgemäß mit den Merkmalen des Anspruches 1 gelöst. Die Unteransprüche geben zweckmäßige Weiterbildungen an.

Das erfindungsgemäße, keramische Hohlfaser-Membranmodul umfasst mindestens eine Hohlfaser aus einem Keramikmaterial, deren stirnseitige Endabschnitte in zwei voneinander beabstandete Einfassungen aufgenommen sind, welche an einem Verbindungsbauteil des Membranmoduls gehalten sind. Der Relativabstand zwischen den beiden Einfassungen - und damit auch der axiale Abstand zwischen den Stirnseiten der Hohlfaser - ist veränderlich einstellbar. Die Einstellung des Relativabstandes erfolgt insbesondere selbsttätig unter der Einwirkung äußerer, eingeprägter Kräfte, welche auf das Hohlfaser-Membranmodul wirken. Auf diese Weise wird eine Nachgiebigkeit erreicht, die auf die Hohlfaser wirkende Kraftspitzen vermeiden hilft, welche andernfalls zu einer Beschädigung der Hohlfaser führen könnten. Sowohl mechanische Belastungen, also starke Vibrationen, Stöße oder dergleichen, die zu Spannungen in der Hohlfaser und/oder sonstigen Bauteilen des Membranmoduls führen können, als auch Druckschwankungen sowie thermische Belastungen als Folge von Temperaturschwankungen können über den selbsttätigen Längenausgleich zwischen den Einfassungen der Hohlfaser kompensiert werden.

Die Einfassungen der Hohlfaser sind an einem beide Einfassungen verbindenden Verbindungsbauteil des Membranmoduls gehalten. Möglich ist sowohl eine Ausführung mit lediglich einer verschiebbaren Einfassung als auch eine Ausführung, in der beide Einfassungen verschiebbar oder in sonstiger Weise verlagerbar am Verbindungsbauteil gehalten sind. Die erste Ausführung besitzt den Vorteil eines einfachen konstruktiven Aufbaues, in der zweiten Ausführung kann jede Einfassung unabhängig von der jeweils gegenüberliegenden Einfassung auf äußere Kräfte reagieren; es ist ein zusätzlicher Freiheitsgrad gegeben, über den auf jeden stirnseitigen Abschnitt des Membranmoduls wirkende Stöße kompensiert werden können.

Das Verbindungsbauteil, an welchem zumindest eine der beiden Einfassungen verschieblich gelagert ist, ist gemäß einer vorteilhaften Ausführung als eine Führungsstange ausgebildet, an der zweckmäßig auch die zweite, nicht verschiebbare Einfassung gehalten ist. Gemäß einer alternativen Ausführung ist es aber auch möglich, beide Einfassungen verschieblich an dieser Führungsstange zu lagern. Des Weiteren kann im Hinblick auf eine verbesserte Führung der Einfassung bzw. der Einfassungen eine zweite Führungsstange vorgesehen sein, wobei die beiden Führungsstangen parallel zueinander liegen. Die zweite Führungsstange ermöglicht ein reibungsarmes Verschieben ohne Verkantungsgefahr.

In der Ausführung mit einer oder mit mehreren Führungsstangen kann das Membranmodul eine offene Bauweise besitzen, gemäß der die Hohlfaser nicht in einem umschließenden Gehäuse geführt ist, sondern vielmehr zur Umgebung hin offen ist. Die Hohlfaser wird in dieser Ausführung üblicherweise stirnseitig von dem zu reinigenden Fluid angeströmt, wobei das Permeat des Fluids über die poröse Keramikwandung der Hohlfaser austreten kann und das Retentat bzw. Konzentrat über die gegenüberliegende Hohlfaserstirnseite abgeleitet wird.

Alternativ hierzu ist es aber auch möglich, ein geschlossenes Gehäuse vorzusehen, in welchem die Hohlfaser aufgenommen ist. Die Anströmung kann prinzipiell in gleicher Weise wie beim offenen Membranmodul erfolgen, jedoch wird das aus der Keramikwandung der Hohlfaser austretende Permeat im Gehäuseinnenraum aufgefangen und von dort über einen separaten Anschluss im Gehäuse abgeleitet. In der geschlossenen Bauweise kann das Gehäuse des Membranmoduls das Verbindungsbauteil bilden, an dem die beiden Einfassungen der Hohlfaser aufgenommen und gelagert sind. Auf eine zusätzliche Führungsstange kann in diesem Fall verzichtet werden; es ist aber auch bei der geschlossenen Bauweise der Einsatz einer oder mehrerer Führungsstangen innerhalb des Gehäuses möglich.

In bevorzugter Ausführung ist eine Mehrzahl von etwa parallel bzw. konzentrisch geführter Hohlfasern vorgesehen, die insbesondere spiral- bzw. wendelförmig aufgewickelt sind. Die Wendelform bietet den Vorteil, dass auf einer vorgegebenen Gesamtlänge des Membranmoduls eine gegenüber einer geradlinigen Hohlfaserausführung erheblich gesteigerte Faseroberfläche gegeben ist, wodurch auch die Filtrationsleistung signifikant gesteigert wird. Ein weiterer, wichtiger Vorteil liegt in dem unproblematischen Längenausgleich, welcher mittels der Wendelstruktur der Hohlfasern ohne die Gefahr eines Bruches erreicht wird.

Weitere Vorteile und zweckmäßige Ausführungen sind den weiteren Ansprüchen, der Figurenbeschreibung und den Zeichnungen zu entnehmen. Es zeigen:

Fig. 1a    eine perspektivische Ansicht eines keramischen Hohlfaser-Membranmoduls mit einem zylindrischen Gehäuse, in welchem mehrere wendelförmig gewickelte Hohlfasern aufgenommen sind, deren jeweilige Stirnseiten in Einfassungen gehalten sind, wobei eine der beiden Einfassungen verschieblich im Gehäuse gelagert ist,

Fig. 1b    eine Fig. 1a entsprechende Ansicht, jedoch mit einer der beiden Einfassungen der Hohlfaser in gegenüber Fig. 1a axial verschobener Position,

Fig. 2a    eine alternative Ausführung eines Hohlfaser-Membranmoduls in offener Bauweise mit zwei Führungsstangen, an denen die beiden Einfassungen der Hohlfaser jeweils verschieblich gelagert sind,

Fig. 2b    eine ähnliche Ausführung wie Fig. 2a, jedoch mit einer unbeweglich an den Führungsstangen gehaltenen Einfassung und einer verschieblich gelagerten Einfassung,

Fig. 3    eine Draufsicht auf eine wendelförmige Hohlfaser,

Fig. 4    eine Ansicht auf die Stirnseite des Membranmoduls mit einer Mehrzahl von Hohlfaserenden, welche in einem Kreis angeordnet sind.

In den Figuren sind gleiche Bauteile mit gleichen Bezugzeichen versehen.

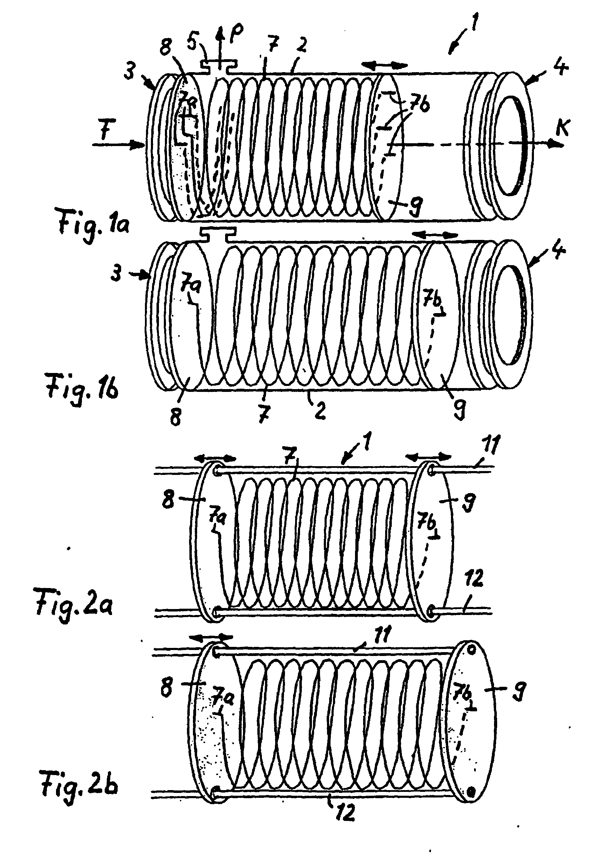

Das in Fig. 1a dargestellte Hohlfaser-Membranmodul 1 wird insbesondere zur Filtration von Fluiden eingesetzt. Das Hohlfaser-Membranmodul 1 umfasst ein zylindrisches, rohrartiges Gehäuse 2, welches an seinen Stirnseiten Anschlüsse 3 und 4 aufweist, zwischen denen im Gehäuseinnenraum eine Mehrzahl von Hohlfasern 7 geführt sind. Die Hohlfasern 7 bestehen aus Keramikmaterial und besitzen eine poröse Wandung, welche beispielsweise eine Porengröße von 5 μm aufweist. Die Hohlfasern 7 sind spiralförmig ausgebildet und bilden Wendeln, welche sich im Gehäuseinnenraum zwischen den Anschlüssen 3 und 4 erstrecken und eine gemeinsame Längsachse mit dem Gehäuse 2 aufweisen. Der Wendelaußendurchmesser ist etwas geringer als der Innendurchmesser des Gehäuses 2, so dass die Hohlfaser-Wendeln auf Abstand zur Gehäuseinnenwand liegen. Im Gehäuseinnenraum können sowohl eine Mehrzahl von Hohlfasern 7 als auch nur eine einzige Hohlfaser geführt sein. Als Material für die Keramikhohlfasern kommen anorganische Materialien wie zum Beispiel Aluminiumoxid, Zirkonoxid, Titanoxid, Siliziumkarbid oder Siliziumoxid in Betracht.

Die Endabschnitte 7a und 7b der Hohlfasern 7 sind fest in scheibenförmigen Einfassungen 8 und 9 aufgenommen, welche benachbart zu den Anschlüssen 3 und 4 an den Stirnseiten des rohrartigen Gehäuses 2 liegen. Die Einfassungen 8 und 9 besitzen zusätzlich auch Dichtungsfunktion und dichten den Gehäuseraum gegenüber der Umgebung strömungsdicht ab. Die Hohlfasern 7 werden zweckmäßig in die Einfassungen 8 und 9 eingegossen, beispielsweise durch Schleuderpotten. Als Material für die Einfassungen kommt beispielsweise PUR in Frage, gegebenenfalls auch keramische Materialien. Außerdem kann zur Verbesserung der Dichtwirkung zumindest eine Seite der Einfassungen mit einem Dichtungsmaterial beschichtet sein. Die Endabschnitte 7a und 7b der Hohlfasern 7 durchragen die Einfassungen 8 und 9, derart, dass die offenen Stirnseiten der Hohlfasern 7 mit der Umgebung außerhalb des Gehäuseinnenraumes kommunizieren.

Das zu filtrierende Fluid F wird wie in Pfeilrichtung dargestellt einer der Stirnseiten des Gehäuses 2 zugeführt und über die offenen Stirnseiten der Endabschnitte 7a in den Innenraum der Hohlfasern eingeleitet. Bei dem noch unfiltrierten Fluid F handelt es sich um eine Rohlösung bzw. Feed. In den Hohlfasern 7 tritt das Filtrat bzw. Permeat P, welches in dem Fluid enthalten ist, durch die Poren der Hohlfaserwandungen hindurch und sammelt sich im Gehäuseinnenraum des Gehäuses 2, von dem aus das Permeat P über einen Anschluss 5 in der Gehäusewandung ausgeleitet wird. Zugleich wird der nicht über die Poren der Hohlfasern austretende Anteil des Fluids weiter durch die wendelförmigen Hohlfasern 7 bis zur gegenüberliegenden Stirnseite geleitet und tritt dort als Retentat bzw. Konzentrat K über die Stirnseiten in den Endabschnitten 7b der Hohlfasern 7 aus dem Membranmodul aus. Das Konzentrat K enthält den nicht ausgefilterten Anteil des Fluids in konzentrierter Form.

Die Einfassung 9, welche der Stirnaustrittsseite des Gehäuses 2 zugewandt ist, ist im Gehäuse axial beweglich gehalten und kann zwischen einer die wendelförmigen Hohlfasern 7 maximal elongierenden Position und einer die axiale Länge verkürzenden Position verschoben werden. Die maximale, axiale Länge der Hohlfasern ist erreicht, wenn die bewegliche, scheibenförmige Einfassung 9 unmittelbar benachbart zum Anschluss 4 liegt, über den das Konzentrat K aus dem Membranmodul ausgeleitet wird. Eine in Gegenrichtung verschobene Position der Einfassung 9 mit minimaler, axialer Länge der Hohlfasern 7 kann vorgegeben werden, beispielsweise über einen Anschlag im Gehäuse 2, welcher ein weiteres Verschieben der Einfassung 9 in Richtung des Anschlusses 3 verhindert, über den das Fluid F dem Membranmodul 1 zuzuführen ist.

Die Einfassung 8, welche benachbart zum Anschluss 3 angeordnet ist, über den das Fluid F zuführbar ist, ist zweckmäßig fest mit dem Gehäuse 2 verbunden, eine Verschiebemöglichkeit der Einfassung 8 besteht im gezeigten Ausführungsbeispiel nicht. Gemäß einer nicht dargestellten Ausführung kann es aber auch zweckmäßig sein, die Einfassung 8 im Bereich der Zufuhr für das Fluid F axial verschieblich auszubilden. Grundsätzlich ist es möglich, entweder nur eine der beiden Einfassungen oder auch beide Einfassungen axial verschieblich zu führen.

In Fig. 1a ist die der Austrittsseite benachbarte Einfassung 9 in einer zurückgeschobenen Position dargestellt, in welcher die Einfassung 9 einen größeren Abstand zum Anschluss 4 aufweist. In Fig. 1b dagegen ist die Einfassung 9 gegenüber der Darstellung nach Fig. 1a in Richtung des Anschlusses 4 verschoben.

Im Ausführungsbeispiel gemäß Fig. 2a ist das Hohlfaser-Membranmodul 1 in offener Bauweise ausgeführt, in der auf ein die Hohlfaser 7 umschließendes Gehäuse verzichtet wird. Als die beiden Einfassungen 8 und 9 verbindende Bauteile sind zwei parallel geführte, sich parallel zur Wendel-Längsachse der Hohlfaser 7 erstreckende Führungsstangen 11 und 12 vorgesehen, an denen die beiden Einfassungen 8 und 9 im Bereich gegenüberliegender Scheibenabschnitte aufgehängt sind. Die beiden Führungsstangen 11 und 12 ragen jeweils durch Ausnehmungen in den Einfassungen 8 und 9 hindurch. Die Einfassungen 8 und 9 sind beide axial verschieblich an den Führungsstangen 11 und 12 gelagert.

Das Ausführungsbeispiel gemäß Fig. 2b unterscheidet sich von demjenigen aus Fig. 2a dadurch, dass gemäß Fig. 2b die eine Einfassung 8 axial verschieblich an den beiden Führungsstangen 11 und 12 gelagert ist, wohingegen die zweite, gegenüberliegende Einfassung 9 fest mit den beiden Führungsstangen 11 und 12 verbunden ist und nicht an diesen axial verschoben werden kann.

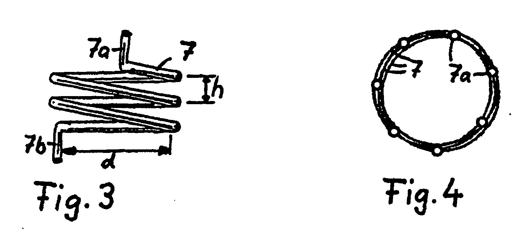

Im Gehäuseinnenraum sind vorteilhaft etwa 15 bis 20, gegebenenfalls aber auch weniger Hohlfasern geführt. Über die Anzahl an Hohlfasern und die Wendelsteigung kann zusätzlich zur Materialwahl und der Porengröße in den Hohlfaserwandungen sowie dem Durchmesser der Wendel und der Gesamtlänge des Membranmoduls die Filtrationsleistung beeinflusst werden. Hierbei hat es sich als zweckmäßig erwiesen, dass die in Fig. 3 dargestellte Steigung h einer Wendel der Hohlfaser 7 mindestens das 0.5fache des Hohlfaser-Außendurchmessers beträgt. Ein bevorzugter Bereich liegt beim 10fachen bis 20fachen des Hohlfaserdurchmessers für die Wendelsteigung h. Der Wendelinnendurchmesser d liegt vorteilhaft bei zumindest 20 mm. Der Außendurchmesser der Hohlfaser kann maximal 1 mm betragen und liegt vorzugsweise in einem Bereich zwischen 0.4 mm und 0.6 mm. Die Wandstärke beträgt maximal 0.2 mm, vorzugsweise 0.05 mm bis 0.1 mm. Die Porosität des Hohlfaser-Keramikmaterials liegt bevorzugt bei 20 % bis 40 %. In einem typischen Anwendungsfall beträgt der Hohlfaser-Außendurchmesser 0.5 mm, der Windungsdurchmesser 100 mm und die Windungssteigung 10 mm. Die Anzahl n der Hohlfasern, die in einem Membranmodul zusammengefasst werden können, hängt vom Außendurchmesser $D_H$ der verwendeten Hohlfasern und der Steigung h der Wendel ab und folgt insbesondere der Beziehung

$$n = h/D_H \; .$$

Im vorgenannten Ausführungsbeispiel können demnach maximal 20 spiralförmige Hohlfasern verwendet werden.

Wie Fig. 4 zu entnehmen, sind die Endabschnitte 7a (ebenso wie die gegenüberliegenden Endabschnitte 7b) der Hohlfasern 7 zweckmäßig gleichförmig in einem Kreis angeordnet. Eine gleichmäßige Verteilung der Endabschnitte ist jedoch nicht zwingend erforderlich; gegebenenfalls kommt auch eine ungleichmäßige bzw. regellose Verteilung entlang eines Umfangskreises oder auch innerhalb der gesamten Stirnfläche der Endabschnitte in Betracht.

**Patentansprüche**

1.　Keramisches Hohlfaser-Membranmodul, mit mindestens einer keramischen Hohlfaser (7), deren stirnseitige Endabschnitte (7a, 7b) in zwei beanstandete Einfassungen (8, 9) aufgenommen sind, welche an einem Verbindungsbauteil gehalten sind, **dadurch gekennzeichnet, dass** der Relativabstand der beiden Einfassungen (8, 9) zueinander veränderlich einstellbar ist.

**2.** Hohlfaser-Membranmodul nach Anspruch 1,
**dadurch gekennzeichnet,**
**dass** die Position mindestens einer Einfassung (8, 9) gegenüber dem Verbindungsbauteil veränderlich einstellbar ist.

**3.** Hohlfaser-Membranmodul nach Anspruch 2,
**dadurch gekennzeichnet,**
**dass** mindestens eine Einfassung (8, 9) verschiebbar an dem Verbindungsbauteil gehalten ist.

**4.** Hohlfaser-Membranmodul nach einem der Ansprüche 1 bis 3,
**dadurch gekennzeichnet,**
**dass** die Positionen beider Einfassungen (8, 9) gegenüber dem Verbindungsbauteil veränderlich einstellbar sind.

**5.** Hohlfaser-Membranmodul nach einem der Ansprüche 1 bis 4,
**dadurch gekennzeichnet,**
**dass** die Hohlfaser (7) in einem umschließenden Gehäuse (2) aufgenommen ist.

**6.** Hohlfaser-Membranmodul nach Anspruch 5,
**dadurch gekennzeichnet,**
**dass** das Gehäuse (2) das Verbindungsbauteil bildet, wobei mindestens eine Einfassung (8, 9) in dem Gehäuse (2) verlagerbar angeordnet ist.

**7.** Hohlfaser-Membranmodul nach Anspruch 5 oder 6,
**dadurch gekennzeichnet,**
**dass** das Gehäuse (2) das Verbindungsbauteil bildet, wobei das Gehäuse (2) längenveränderlich ausgebildet ist und der Abstand zwischen den Endabschnitten (7a, 7b) der Hohlfaser (7) über eine Längeneinstellung des Gehäuses (2) veränderbar ist.

**8.** Hohlfaser-Membranmodul nach einem der Ansprüche 1 bis 7,
**dadurch gekennzeichnet,**
**dass** das Verbindungsbauteil als Führungsstange (11, 12) zwischen den beiden Einfassungen (8, 9) ausgebildet ist.

**9.** Hohlfaser-Membranmodul nach einem der Ansprüche 1 bis 8,
**dadurch gekennzeichnet,**
**dass** die Hohlfaser (7) spiralförmig als Wendel im Gehäuseinnenraum geführt ist.

**10.** Hohlfaser-Membranmodul nach Anspruch 9,
**dadurch gekennzeichnet,**
**dass** die Steigung der Wendel mindestens das 0,5fache des Außendurchmessers der Hohlfaser (7) beträgt.

**11.** Hohlfaser-Membranmodul nach Anspruch 10,
**dadurch gekennzeichnet,**
**dass** die Steigung (h) der Wendel das 10fache bis 20fache des Durchmessers der Hohlfaser (7) beträgt.

**12.** Hohlfaser-Membranmodul nach einem der Ansprüche 9 bis 11,
**dadurch gekennzeichnet,**
**dass** der Innendurchmesser (d) der Wendel mindestens 20 mm beträgt.

**13.** Hohlfaser-Membranmodul nach einem der Ansprüche 1 bis 12,
**dadurch gekennzeichnet,**
**dass** eine Mehrzahl von Hohlfasern (7) im Gehäuseinnenraum gebündelt sind.

**14.** Hohlfaser-Membranmodul nach Anspruch 9 und 13,
**dadurch gekennzeichnet,**
**dass** maximal 20 spiralförmige Hohlfasern (7) im Gehäuseinnenraum geführt sind.

**15.** Hohlfaser-Membranmodul nach Anspruch 9 und 13 oder 14,
**dadurch gekennzeichnet,**
**dass** die Stirnseiten der Hohlfasern (7) in einem Kreis angeordnet sind.

Fig. 1a

Fig. 1b

Fig. 2a

Fig. 2b

Fig. 3

Fig. 4

**Europäisches Patentamt**

## EUROPÄISCHER RECHERCHENBERICHT

Nummer der Anmeldung

EP 04 10 6728

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| D,X | WO 03/051495 A (FILTERWERK MANN+HUMMEL GMBH; GERLACH, KARIN; HARTMANN, UWE; HEILMANN,) 26. Juni 2003 (2003-06-26) * Zusammenfassung; Abbildungen 8,9 * * Seite 11, Zeile 15 - Zeile 19 * * Seite 17, Zeile 3 - Seite 20, Zeile 31 * ----- | 1-6,13 | B01D63/02 |
| A | DE 199 00 432 A1 (BLUM, STEPHAN R; HEGGEMANN GMBH) 13. Juli 2000 (2000-07-13) * Zusammenfassung; Abbildungen * * Seite 6, Zeile 21 - Seite 10, Zeile 39 * ----- | 1-3,5,6, 8,13 | |
| A | DE 44 01 014 A1 (GKSS-FORSCHUNGSZENTRUM GEESTHACHT GMBH, 21502 GEESTHACHT, DE) 28. Juli 1994 (1994-07-28) * das ganze Dokument * ----- | 1-6,13 | |
| A | US 4 961 464 A (WOLLBECK ET AL) 9. Oktober 1990 (1990-10-09) * das ganze Dokument * ----- | 1-6,13 | |
| A | WO 03/000389 A (PETRO SEP INTERNATIONAL LTD; BAIG, FAKHIR, U; KAZI, ABDUL, M; AL-HASSA) 3. Januar 2003 (2003-01-03) * Zusammenfassung; Abbildungen 2,3 * * Seite 13, Zeile 15 - Seite 14, Zeile 13 * | 1-6,8,13 | |
| A | US 4 348 458 A (OTSTOT ET AL) 7. September 1982 (1982-09-07) * das ganze Dokument * ----- | 1,9-15 | |

**RECHERCHIERTE SACHGEBIETE (Int.Cl.7)**

B01D

Der vorliegende Recherchenbericht wurde für alle Patentansprüche erstellt

| Recherchenort | Abschlußdatum der Recherche | Prüfer |
|---|---|---|
| Den Haag | 6. April 2005 | Hoornaert, P |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
................................................................
& : Mitglied der gleichen Patentfamilie, übereinstimmendes Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 04 10 6728

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

06-04-2005

| Im Recherchenbericht angeführtes Patentdokument | | Datum der Veröffentlichung | Mitglied(er) der Patentfamilie | | Datum der Veröffentlichung |
|---|---|---|---|---|---|
| WO 03051495 | A | 26-06-2003 | WO | 03051495 A1 | 26-06-2003 |
| | | | EP | 1458463 A1 | 22-09-2004 |
| DE 19900432 | A1 | 13-07-2000 | DE | 20022342 U1 | 28-06-2001 |
| | | | WO | 0040325 A1 | 13-07-2000 |
| DE 4401014 | A1 | 28-07-1994 | DE | 9300929 U1 | 08-04-1993 |
| US 4961464 | A | 09-10-1990 | DE | 3831786 A1 | 29-03-1990 |
| | | | AU | 610801 B2 | 23-05-1991 |
| | | | AU | 4148089 A | 22-03-1990 |
| | | | EP | 0360133 A2 | 28-03-1990 |
| | | | JP | 2115026 A | 27-04-1990 |
| WO 03000389 | A | 03-01-2003 | CA | 2351272 A1 | 22-12-2002 |
| | | | WO | 03000389 A2 | 03-01-2003 |
| | | | US | 2004211726 A1 | 28-10-2004 |
| US 4348458 | A | 07-09-1982 | EP | 0047640 A2 | 17-03-1982 |
| | | | JP | 57077321 A | 14-05-1982 |

EPO FORM P0461

Für nähere Einzelheiten zu diesem Anhang : siehe Amtsblatt des Europäischen Patentamts, Nr.12/82